# EUROPÄISCHE PATENTSCHRIFT

(11) **EP 3 781 434 B1**
(45) Veröffentlichungstag und Bekanntmachung des Hinweises auf die Patenterteilung: **08.06.2022**
(21) Anmeldenummer: 19711273.3
(22) Anmeldetag: 08.03.2019
(51) Int. Cl.: B60N 2/90, B60N 2/02

(54) **STELLANTRIEB FÜR EIN KRAFTFAHRZEUG, MIT EINEM ELEKTROMOTOR, EINEM GETRIEBE UND EINER SPINDEL**
ACTUATOR FOR AN AUTOMOTIVE VEHICLE, WITH AN ELECTRIC DRIVE, A GEAR AND A SPINDLE
VÉRIN POUR VÉHICULE AUTOMOBILE, AVEC MOTEUR ÉLECTRIQUE, UN RÉDUCTEUR ET UN BROCHE

(30) Priorität: 19.04.2018 DE 102018109351
(43) Veröffentlichungstag der Anmeldung: 24.02.2021
(73) Patentinhaber: FISHER DYNAMICS GERMANY GMBH, 42287 Wuppertal (DE)
(72) Erfinder: BECKER, Hans, Burckhard, 42655 Solingen (DE)
(74) Vertreter: Patentanwälte Bauer Vorberg Kayser
(86) Internationale Anmeldenummer: PCT/EP2019/055860
(87) Internationale Veröffentlichungsnummer: WO 2019/201509

(56) Entgegenhaltungen:
- WO-A1-86/06036
- WO-A1-2018/019609
- US-A- 3 532 322
- US-A- 3 617 021

## Beschreibung

Die Erfindung bezieht sich auf einen Stellantrieb für ein Kraftfahrzeug, insbesondere für eine Verstellung in einem Kraftfahrzeugsitz, der Stellantrieb hat einen Elektromotor, ein Getriebe und eine Spindel. Dabei treibt der Elektromotor eine Antriebswelle an, auf der sich eine Schnecke befindet. Diese ist in Eingriff mit dem Getrieberad, das im Gehäuse angeordnet ist und in dem Lagerteil drehbar aufgenommen ist. Das Lagerteil befindet sich zwischen Getrieberad und Gehäuse. Die Spindel hat eine parallel zur Drehachse verlaufende Spindelachse, ist mit einem durchgehenden Innengewinde des Getrieberades in Eingriff und erstreckt sich durch Durchlässe des Gehäuses.

Derartige Spindelantriebe sind bekannt, beispielsweise aus WO 86/06036 A1, WO 99/51456 A1, WO 01/60656 A1, WO 03/068551 A1, DE 10 2006 005 499 A1 und EP 1 645 458 A1. Sie dienen zum Verstellen zweier zueinander verstellbarer Teile, beispielsweise zweier über eine Gelenkverbindung miteinander verbundenen Teile. Bei einer Verstellbewegung ist in jedem Einzelfall ein präziser, geometrisch konstanter Verstellweg in der Regel nicht gegeben. Es ist daher nicht möglich, den Elektromotor mit einem der beiden zu verstellenden Teile und die Spindel mit dem anderen fest oder in einer Gelenksverbindung zu verbinden, ohne einen Ausgleich zu schaffen. So beschreibt zum Beispiel die DE 10 2006 005 499 A1 einen äußeren Halter und ein inneres Getriebe, das parallel zur Achse der Antriebswelle innerhalb des äußeren Halters schwenkbar ist. Ähnlich sind auch der Antrieb nach der WO 86/06036 A1 und der WO 01/60656 A1 aufgebaut. Die Antriebe nach der WO 99/51456 A1 und nach der EP 1 645 458 A1 sehen keinen Ausgleich vor.

Die WO 2018/019609 A1 aus dem Stand der Technik, von welcher die vorliegende Erfindung ausgeht, beschreibt eine Antriebseinrichtung für einen Komfortantrieb eines Kraftfahrzeugs mit einem eine Antriebswelle aufweisenden Elektromotor, mit einer an der Antriebswelle angeordneten Verzahnung, die mit einem in einem Innengehäuse angeordneten Übertragungselement zusammenwirkt, wobei das Übertragungselement mit einem eine Längsachse aufweisenden Antriebselement zusammenwirkt, wobei das Übertragungselement dazu ausgebildet ist, eine Drehbewegung des Übertragungselements in eine Linearbewegung des Antriebselements zu übertragen, wobei das Innengehäuse in einer Aufnahme eines Außengehäuses angeordnet ist und wobei das Außengehäuse eine Schnittstelle zur Verbindung der Antriebseinrichtung mit einer Trägerstruktur eines Kraftfahrzeugs ausbildet.

Nun hat sich jedoch herausgestellt, dass ein Ausgleich allein dadurch, dass eine Schwenkbewegung der Spindel gegenüber dem Getriebe oder dem Elektromotor um eine Achse, die parallel zur Achse der Antriebswelle ist, nicht ausreicht. Die entsprechende Komponente des Ausgleichs ist zwar die Wichtigste, andere Komponenten dürfen aber nicht übersehen werden. So ist es wünschenswert, wenn auch ein Ausgleich dergestalt vorgesehen ist, dass eine gewisse Schwenkbewegung der Spindel um eine Schwenkachse möglich ist, die sowohl quer zur genannten Achse als auch quer zur Achse der Spindel verläuft.

Hier setzt nun die Erfindung ein. Sie hatte sich zur Aufgabe gemacht, die bekannten Stellantriebe der oben genannten Art dahingehend weiterzuentwickeln, dass nicht nur ein einachsiger Ausgleich, sondern auch zumindest ein zweiachsiger Ausgleich möglich ist.

Diese Aufgabe wird gelöst durch einen Stellantrieb für ein Kraftfahrzeug, insbesondere für einen Fahrzeugsitz, mit einem Elektromotor, der eine Antriebswelle antreibt, mit einem Getriebe, das a) ein Gehäuse, b) ein Getrieberad, das mit der Antriebswelle in Zahneingriff ist und eine Drehachse hat, und c) ein Lagerteil aufweist, das sich zwischen Getrieberad und Gehäuse befindet, und mit einer Spindel, die eine parallel zur Drehachse verlaufende Spindelachse hat, durch ein Innengewinde des Getrieberades und Durchlässe des Gehäuses verläuft und mit diesem Innengewinde in Eingriff ist, wobei das Gehäuse eine Zylinderbohrung aufweist, die das Lagerteil aufnimmt und die eine Zylinderachse definiert, das Lagerteil von einer dreidimensionalen Fläche begrenzt ist, die in Richtung der Zylinderachse gesehen ihre größte Querschnittsfläche im Schnittpunkt der Zylinderachse mit der Drehachse hat, wobei diese größte Querschnittsfläche eine Kreisfläche ist und wobei mit wachsendem Abstand von diesem Schnittpunkt in beiden Richtungen der Zylinderachse die Größe der Querschnittsfläche zunehmend, insbesondere stetig, abnimmt, und das Lagerteil zwei Lagerschalen aufweist, die jeweils eine Lageröffnung haben, die zentrisch zur Drehachse ist, durch die die Spindel hindurch greift und in der das Getrieberad drehbar gelagert ist.

Bei diesem Stellantrieb befindet sich das Getrieberad zwischen den beiden Lagerschalen. Getrieberad und die beiden Lagerschalen bilden eine Einheit, die sich gemeinsam bewegt. Diese Einheit ist in der Zylinderbohrung gehalten. Sie kann um die Achse der Zylinderbohrung schwenken. Sie kann zudem um mindestens eine weitere Achse schwenken, die zu der Achse der Zylinderbohrung orthogonal ist. Dabei kann sie um die Achse der Zylinderbohrung um einen ersten Winkelbereich schwenken, und um die mindestens eine weitere Achse um einen zweiten Winkelbereich schwenken. Der zweite Winkelbereich beträgt maximal 30 %, insbesondere maximal 15 % des ersten Winkelbereichs. Es sind damit Ausgleichsbewegungen um zwei oder drei orthogonale Schwenkachsen möglich. Die Ausgleichsbewegungen können gleichzeitig mit Komponenten um zwei oder drei dieser orthogonalen Schwenkachsen erfolgen. Es sind Ausgleichsbewegungen um Schwenkachsen möglich, die eine beliebige Richtung im Raum haben.

Der erfindungsgemäße Stellantrieb kann somit wie folgt an den zwei gegeneinander zu verstellenden Teilen befestigt werden: Der Elektromotor, der vorzugsweise mit dem Gehäuse des Getriebes fest verbunden ist, wird an einem der Teile festgelegt. An dem anderen Teil wird das freie Ende der Spindel angelenkt. Alle Ausgleichsbewegungen, die notwendig sind, finden innerhalb des Stellantriebes statt. Der erfindungsgemäße Stellantrieb benötigt keinen separaten Halter. Die Spindel hat vorzugsweise an ihrem freien Ende ein Loch, das einen Gelenksstift aufnehmen kann.

Der erste Winkelbereich ist lediglich durch das in der entsprechenden Schwenkrichtung erfasste Maß der Durchlässe des Gehäuses begrenzt. Der erste Schwenkwinkel kann beispielsweise bis zu plusminus 15° betragen, er kann vorzugsweise bei bis zu plusminus 10° liegen. Der zweite Schwenkwinkel kann im Bereich plusminus 3°, vorzugsweise plusminus 1,5° liegen. Er wird zudem durch die dreidimensionale Fläche bestimmt. Diese legt fest, in welchem Winkelbereich sich die Einheit im Winkel zur Achse der Zylinderbohrung stellen kann. Da für den zweiten Schwenkwinkel nur ein geringer Winkelbereich erforderlich ist, kann das Maß, mit dem die Querschnittsfläche mit wachsendem Abstand von dem Schnittpunkt in beiden Richtungen der Zylinderachse abnimmt, gering gewählt werden. Ein Verhältnis des Radius der Zylinderbohrung zu dem Radius einer Kreislinie, innerhalb welcher sich die dreidimensionale Fläche in einer Ebene befindet, die parallel zur Zylinderachse verläuft, von größer als 3, insbesondere größer als 8 ist vorteilhaft. Ein derartiges Verhältnis führt zu einer guten Abstützung des Lagerteils innerhalb der Zylinderbohrung.

Das Lagerteil ist aus zwei Lagerschalen gebildet. Diese können baugleich sein. Vorzugsweise befindet sich eine Lageröffnung jeweils unterhalb eines Durchlasses des Gehäuses. Dabei ist es günstig, das Getrieberad mit Lagerstummel zu versehen, die beidseitig vorstehen und in die Lageröffnungen ragen. Zwischen diesen Lagerstummeln und den Lageröffnungen können Lagermittel vorgesehen sein, die für ein möglichst reibungsfreies Drehen des Getrieberades in die Lagerschalen sorgen. Zwei Lagerschalen, das dazwischen befindlichen Getrieberad und die jeweiligen Lagermittel können somit eine vormontierte Einheit bilden, die in die Zylinderbohrung eingefügt wird.

Die dreidimensionale Fläche ist keine Kugelfläche. Vorzugsweise hat die Antriebswelle eine Schnecke, sie wirkt mit einem Schneckenrad des Getrieberades zusammen. Vorzugsweise ist das Schneckenrad als sphärisches Zahnrad ausgebildet. Dadurch bleibt es bei einer Ausgleichsbewegung um den ersten Schwenkwinkel besser in Eingriff mit der Schnecke als ein Zahnrad mit parallel zur Drehachse verlaufenden Flanken. Es ist aber möglich, das Schneckenrad mit gradlinig endenden Zähnen zu versehen, insbesondere bei einem kleineren Bereich des ersten Schwenkwinkels und/oder bei ausreichender Tiefe des Zahneingriffs.

Vorzugsweise hat das Gehäuse einen Hauptteil, der die Zylinderbohrung ausbildet, und einen Deckel. Dabei schließt der Deckel lediglich den Hauptteil nach außen ab und ist im Wesentlichen flach. Erfindungsgemäß ist das Gehäuse mit dem Elektromotor starr verbunden.

Vorzugsweise ist die dreidimensionale Fläche von einem Rotationsellipsoid gebildet, der eine erzeugende Ellipse hat, welche eine große Halbachse, die mit einer Rotationsachse der erzeugenden Ellipse zusammenfällt und eine kleine Halbachse aufweist, deren Länge i) dem Radius der Zylinderbohrung angepasst ist und ii) maximal 20 % der Länge der großen Halbachse beträgt. Ein Ausgleich von 3° im zweiten Winkelbereich ist erreicht, wenn die große Halbachse des Rotationellipsoids mit einer Abweichung von 3° zur Zylinderachse steht.

Vorzugsweise sind die Durchlässe des Gehäuses Langlöcher, die eine große lichte Abmessung haben, welche peripher um die Zylinderachse und damit in Richtung des ersten Winkelbereichs verläuft, und eine kleine lichte Abmessung haben, die parallel zur Zylinderachse verläuft. Durch die Abmessungen und damit die Form der Durchlässe kann der Winkelbereich eingeschränkt werden, in dem jeweils Ausgleichsbewegungen stattfinden können.

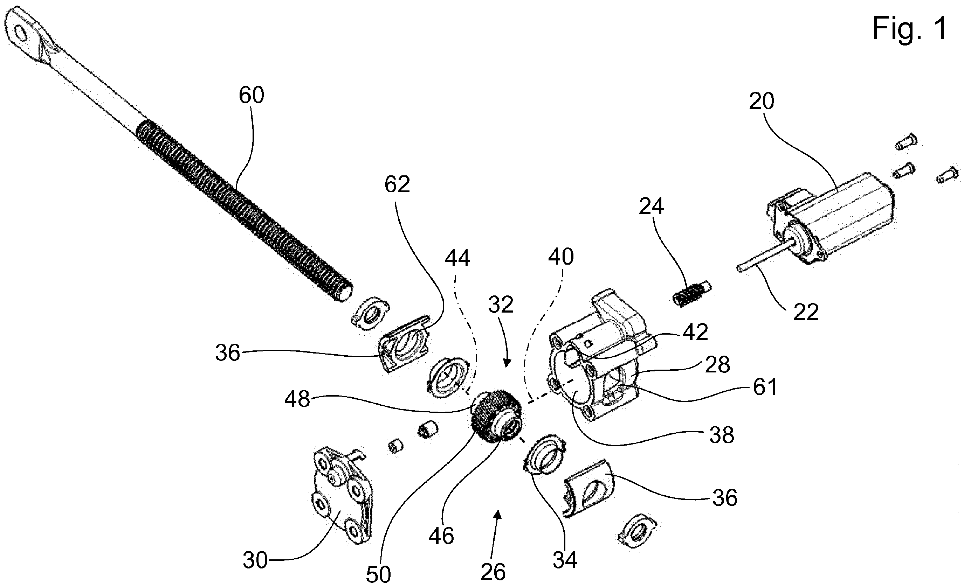

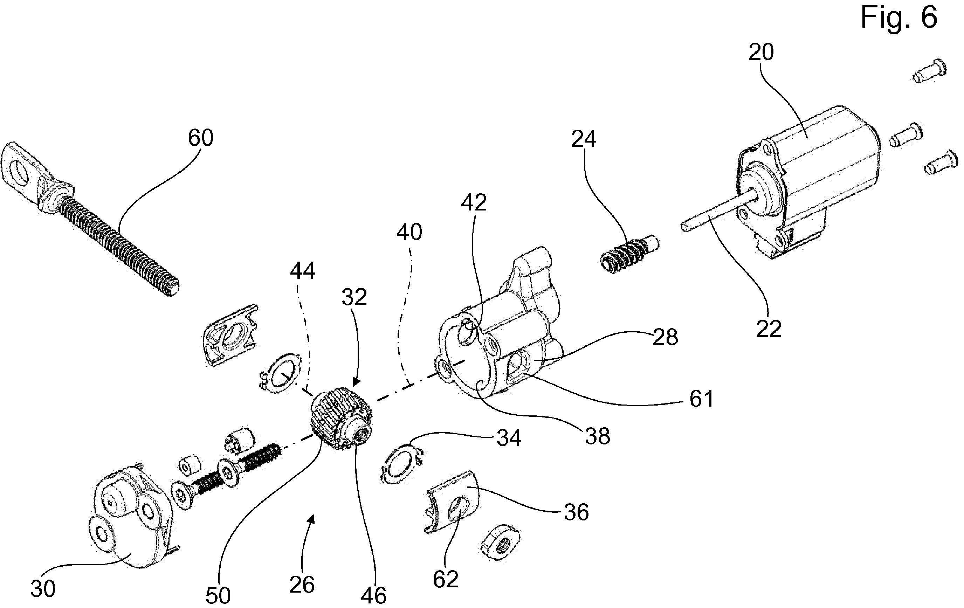

Weitere Vorteile und Merkmale der Erfindung ergeben sich aus den übrigen Ansprüchen sowie der nun folgenden Beschreibung von zwei nicht einschränkend zu verstehenden Ausführungsbeispielen der Erfindung, die unter Bezugnahme auf die Zeichnung im Folgenden näher erläutert werden. In dieser Zeichnung zeigen
- Figur 1: ein perspektivisches Montagebild eines ersten Ausführungsbeispiels,

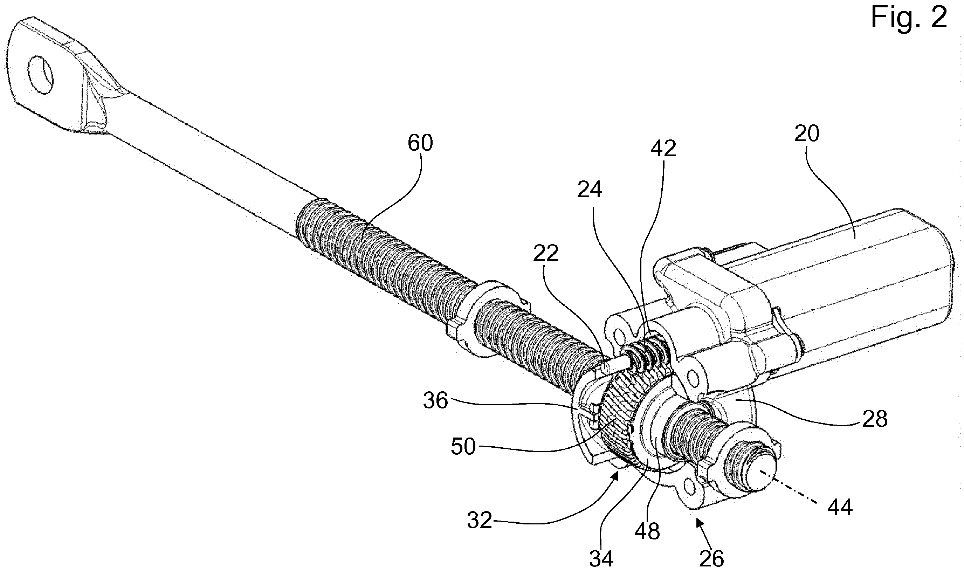

- Figur 2: ein perspektivisches Schnittbild der montierten Anordnung gemäß Figur 1,

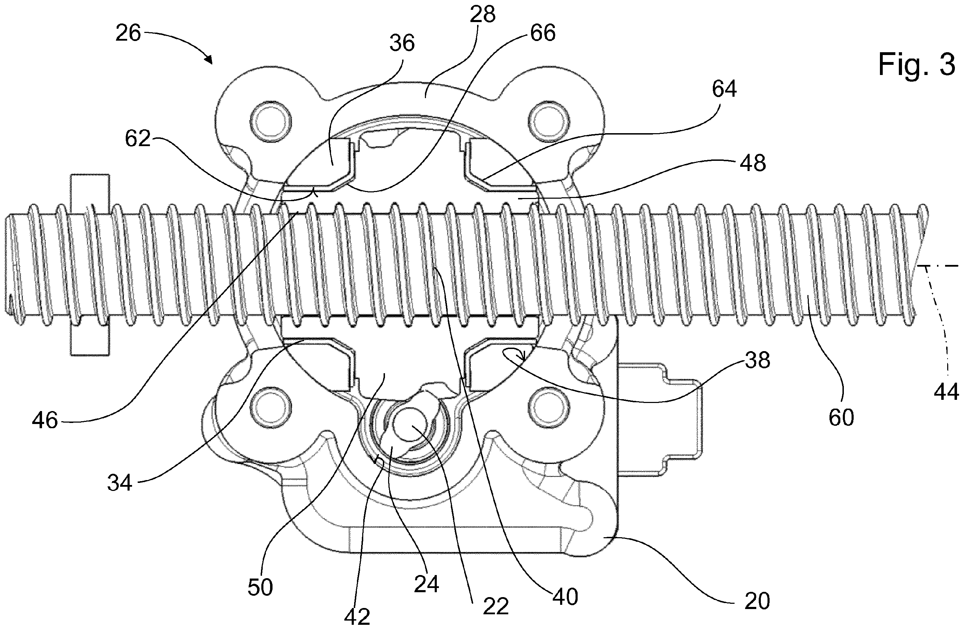

- Figur 3: ein Schnittbild mit einer quer zur Antriebswelle verlaufenden Schnittebene der Anordnung gemäß Figur 2,
- Figur 4: eine prinzipielle Darstellung einer Zylinderbohrung und eines darin befindlichen Getrieberades in einer Schnittebene, die durch die Drehachse und die Zylinderachse bestimmt ist, zur Erläuterung der dreidimensionalen Fläche,
- Figur 5: eine prinzipielle Darstellung wie Figur 4, jedoch nunmehr mit einer um 90° um die Zylinderachse gedrehten Schnittebene,
- Figur 6: ein perspektivisches Montagebild ähnlich Figur 1 für ein zweites Ausführungsbeispiel, und

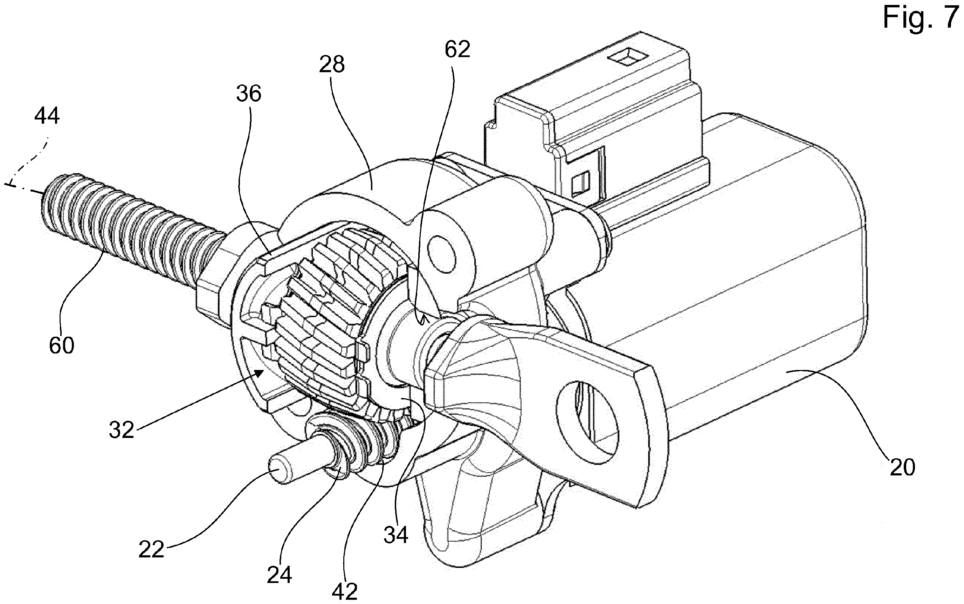

- Figur 7: ein perspektivisches Schnittbild der montierten Anordnung gemäß Figur 4, die Schnittebene liegt im Wesentlichen in der Ebene aus Drehachse und dritter Achse.
Der Stellantrieb hat einen Elektromotor 20, dieser ist antriebsverbunden mit einer Antriebswelle 22, an der eine Schnecke 24 angeordnet ist. Der Elektromotor 20 ist über drei Befestigungsmittel mit einem Getriebe 26 verbunden, siehe Figuren 1 und 6. Dieses hat ein Gehäuse, das sich aus einem Hauptteil 28 und einem Deckel 30 zusammensetzt. Es hat weiterhin ein Getrieberad 32, zwei Lagermittel 34 und ein Lagerteil, das aus zwei einzelnen Lagerschalen 36 besteht.

Das Hauptteil 28 begrenzt eine Zylinderbohrung 38, sie hat eine Zylinderachse 40 und ist einseitig offen, diese Öffnung wird durch den Deckel 30 lösbar verschlossen. Die Zylinderbohrung 38 hat eine lichte Tiefe, die im Bereich von 70 bis 130 % ihres Durchmessers liegt. Das Hauptteil 28 hat weiterhin eine Rille 42, die den größten Teil der Schnecke 24 aufnimmt. Die Rille 42 verläuft parallel zur Zylinderachse 40 und geht über ihre gesamte axiale Länge der Zylinderbohrung 38 frei in die Zylinderbohrung 38 über. Im Deckel 30 ist die Schnecke 24 bzw. eine mit ihr verbundene Welle durch ein Lager drehbar gelagert, das Hauptteil 28 hat eine entsprechende Öffnung.

Das Getrieberad 32 hat eine Drehachse 44, ein zu dieser Drehachse 44 zentrisches Innengewinde 46, zwei Lagerstummel 48 und ein Schneckenrad 50, das in Eingriff mit der Schnecke 24 ist. Das Schneckenrad 50 ist ein sphärisches Zahnrad. Es hat einen Außendurchmesser, der im Bereich von 70 bis 90 % des Durchmessers der Zylinderbohrung 38 liegt.

Der Hauptteil 28, das Getrieberad 32 und die Lagerschalen 36 sind aus Kunststoff hergestellt, insbesondere einem verstärkten Kunststoff.

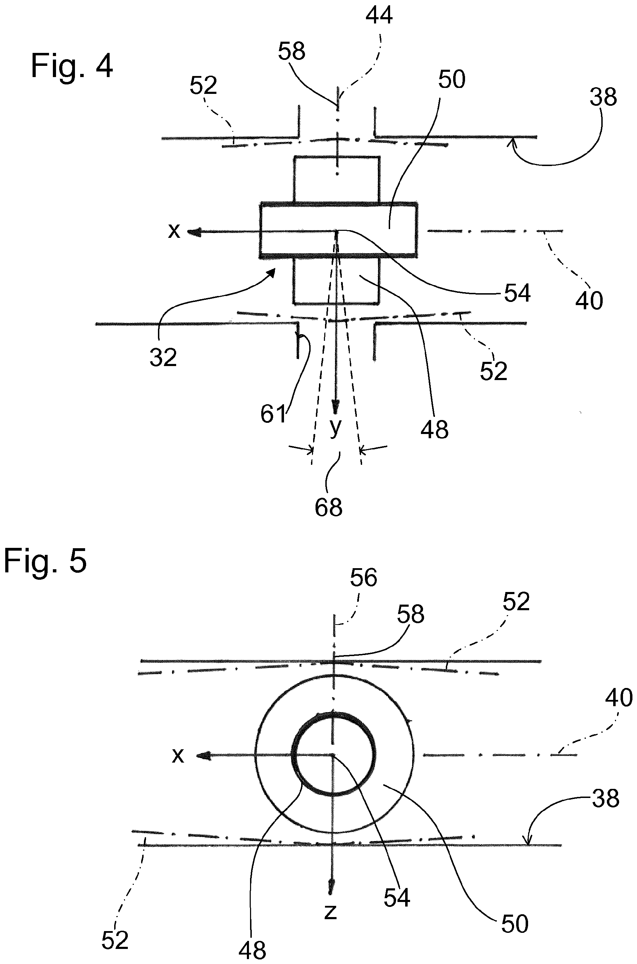

Die beiden Lagerschalen 36 sind baugleich. Sie sind im wesentlichen Zylindersegmente. Sie befinden sich jeweils innerhalb einer gedachten dreidimensionalen Fläche 52, siehe Figuren 4 und 5. Diese hat ihre größte Querschnittsabmessung quer zur Zylinderachse 40 gesehen an der Stelle, in der sich Zylinderachse 40 und Drehachse 44 schneiden. Dieser sogenannte Schnittpunkt 54 befindet sich in der geometrischen Mitte des Getrieberads 32. Zur weiteren Beschreibung wird noch eine dritte Achse 56 hinzugezogen, die orthogonal sowohl zu der Zylinderachse 40 als auch der Drehachse 44 verläuft und mit diesen Achsen ein orthogonales Koordinatensystem bildet, das sein Zentrum im genannten Schnittpunkt 54 hat. Der Außendurchmesser des Schneckenrades 50 beträgt 70 bis 90 % der in Richtung der dritten Achse 56 bestimmten Abmessung einer Lagerschale 36. Dieser Außendurchmesser beträgt 80 bis 120 % der in Richtung der Zylinderachse 40 bestimmten Abmessung einer Lagerschale 36.

Die beiden Lagerschalen 36 ragen an der Stelle, an der die dreidimensionale Fläche 52 - rechtwinklig zur Zylinderachse 40 gemessen - ihre größte Querschnittsabmessung hat, am weitesten radial nach außen vor. Sie ragen so weit vor, dass sie an der Zylinderbohrung 38 anliegen. Dort, wo sie am weitesten radial nach außen ragen, nämlich in der Ebene von Drehachse 44 und dritter Achse 56, ist ihr Verlauf durch eine Kreislinie begrenzt, deren Radius so dem Radius der Zylinderbohrung 38 angepasst ist, dass die Lagerschalen 36 passgenau in der Zylinderbohrung 38 aufgenommen sind.

Die von der Drehachse 44 und der dritten Achse 56 aufgespannte Ebene wird auch als Schnittfläche 58 bezeichnet. In Richtung der Zylinderachse 40 gesehen nehmen die in Ebenen parallel zu dieser Schnittfläche 58 bestimmten Durchmesser der dreidimensionalen Fläche 52 mit wachsendem Abstand von der Schnittfläche 58 ab. So nimmt zumindest der parallel zur Drehachse 44 bestimmte Durchmesser entsprechend ab. Anders ausgedrückt springen die beiden Lagerschalen 36 mit größer werdendem Abstand von der Schnittfläche 58 und gesehen in Richtung der Drehachse 44 weniger nach außen vor. Dadurch können die beiden Lagerschalen 36 geringfügig um die dritte Achse 56 verschwenkt werden. Dieser Winkel, der im sogenannten zweiten Schwenkwinkelbereich liegt, ist gering, der zweite Schwenkwinkelbereich liegt bei maximal plusminus 1,5°. Dementsprechend gering ist auch der Unterschied zu einem geradlinigen Verlauf der dreidimensionalen Fläche parallel zur Zylinderachse 40 und bestimmt in der Ebene aus Zylinderachse 40 und Drehachse 44.

Gesehen in der Ebene von Zylinderachse 40 und dritter Achse 56 ist es einerseits möglich, dass die in dieser Ebene und parallel zur dritten Achse 56 bestimmten Werte des Durchmessers der dreidimensionalen Fläche mit wachsendem Abstand von der Schnittfläche 58 ebenfalls kleiner werden, oder andererseits möglich, dass diese Werte des Durchmessers konstant bleiben. Im letzteren, zweiten Fall liegt die 52 konstant an der Zylinderbohrung 38 an, im ersten Fall entfernt sie sich von dieser mit wachsendem Abstand von der Schnittfläche 58 und gemessen parallel zur dritten Achse 56, so wie dies oben analog für die Durchmesser erläutert wurde, die in Ebenen parallel zur Schnittfläche 58 in Richtung der Drehachse 44 bestimmt werden. Im ersten Fall ist auch eine Ausgleichsbewegung durch Schwenken um die Drehachse 44 erreicht. Im zweiten Fall findet diese zusätzliche Ausgleichsbewegung nicht statt.

Anhand der Figuren 4 und 5 werden die oben beschriebenen geometrischen Verhältnisse noch einmal erläutert. In diesen Figuren ist die dreidimensionale Fläche 52 eingezeichnet. Zusätzlich eingezeichnet zur besseren Orientierung und zum besseren Verständnis sind das Getrieberad 32 und die Zylinderbohrung 38 mit Durchlässen 61. In diesen Figuren ist das Koordinatensystem eingezeichnet. Die x-Achse wird durch die Zylinderachse 40 gebildet, die y-Achse wird durch die Drehachse 44 gebildet und die z-Achse ist die dritte Achse 56. Die dreidimensionale Fläche 52 begrenzt die Lagerteile nach außen. Die dreidimensionale Fläche 52 hat ihre größte Querschnittsabmessung quer zur Zylinderachse 40 gesehen im Schnittpunkt 54, also in der Schnittfläche 58. Die dreidimensionale Fläche 52 ist spiegelsymmetrisch zu dieser Schnittfläche 58, weiterhin zu der x-y Ebene und zu der x-z Ebene. Vorzugsweise ist auch jede Lagerschale 36 spiegelsymmetrisch zu der x-y Ebene und zu der y-z Ebene (Schnittfläche 58). Eingezeichnet in Figur 4 ist der zweite Schwenkwinkelbereich 68. Der erste Schwenkwinkelbereich verläuft rechtwinklig zur Papierebene der Figur 4, in der Schnittfläche 58, die y-Achse ist seine Mitte. Ein dritter Schwenkwinkelbereich kann in Figur 5 eingezeichnet werden, entsprechend der Darstellung in Figur 4. Die Schwenkbewegung erfolgt um die y-Achse.

Vorzugsweise verläuft die dreidimensionale Fläche 52 anders als in Figur 5 dargestellt, nämlich so, dass die gezeigte strichpunktierte Linie sich nicht mit zunehmender Entfernung von der Schnittfläche 58 von der Linie der Zylinderbohrung 38 entfernt, sondern jeweils mit einer der Linien für die Zylinderbohrung 38 zusammenfällt. In diesem Fall ist eine Ausgleichsbewegung mit einer Schwenkbewegung um die y-Achse nicht möglich.

Der Stellantrieb weist eine Spindel 60 auf, sie hat eine Spindelachse, die mit der Drehachse 44 zusammenfällt. Die Spindel 60 hat ein Außengewinde, das in Eingriff mit dem Innengewinde 46 ist. Die Spindel 60 verläuft durch die Durchlässe 61, die im Hauptteil 28 ausgebildet sind. Sie sind Langlöcher, die eine große lichte Abmessung haben, welche peripher um die Zylinderachse 40 verläuft, und eine kleine lichte Abmessung haben, die parallel zur Zylinderachse 40 verläuft, letztere ist mindestens 50 % kleiner als die große lichte Abmessung. Durch die große lichte Abmessung wird der erste Schwenkwinkelbereich begrenzt. Der zweite Schwenkwinkelbereich wird durch die spezielle Form der Lagerschalen 36 und/oder das Maß der kleinen lichten Abmessung bestimmt.

Die Spindel 60 verläuft weiterhin durch die Lagermittel 34 und durch das Getrieberad 32, das durchgängig mit Innengewinde 46 versehen ist. Die Lagermittel 34 sind gegen Verdrehen durch vorspringende Nasen gesichert. Im zweiten Ausführungsbeispiel sind die Lagermittel 34 als flache Ringscheiben aus Metall ausgebildet. Die Scheiben befinden sich zwischen einer Seitenwand des Schneckenrades 50 und den Lagerschalen 36. Im ersten Ausführungsbeispiel sind die Lagermittel 34 diffiziler gestaltet, sie liegen nun nicht nur zwischen einer Seitenwand des Schneckenrades 50 und den Lagerschalen 36, sondern auch zwischen den Lagerstummel 48 und einer Lageröffnung 62 der Lagerschalen 36. In einem dazwischenliegenden Übergangsbereich 64 verlaufen die Lagermittel 34 schräg zur Seitenwand und zu den Lagerstummeln 48. An diesem Übergangsbereich 64 befindet sich ein Luftspalt 66. Er tritt zwischen dem Übergangsbereich 64 und einer schrägen Schulter des Getrieberades 32 auf. Auf der anderen Seite des Luftspaltes 66 liegt das Lagermittel 34 an der benachbarten Lagerschale 36, die dort ebenfalls schräg verläuft, an.

Der Stellantrieb für ein Kraftfahrzeug weist ein Getriebe 26, das ein Gehäuse, ein Getrieberad 32, das mit einer Antriebswelle 22 in Eingriff ist, ein Lagerteil und eine Drehachse 44 hat, und eine Spindel 60 auf die durch ein Innengewinde 46 des Getrieberades 32 und Durchlässe 61 des Gehäuses verläuft. Das Gehäuse weist eine Zylinderbohrung 38 auf, die das Lagerteil aufnimmt und eine Zylinderachse 40 definiert. Das Lagerteil ist von einer dreidimensionalen Fläche 52 begrenzt, die in Richtung der Zylinderachse 40 gesehen ihre größte Querschnittsfläche rechtwinklig zur Zylinderachse 40 im Schnittpunkt 54 der Zylinderachse 40 mit der Drehachse 44 hat. Diese größte Querschnittsfläche ist eine Kreisfläche. Mit wachsendem Abstand von diesem Schnittpunkt 54 in beiden Richtungen der Zylinderachse 40 nimmt die Größe der Querschnittsfläche ab und ist vorzugsweise nicht mehr eine Kreisfläche. Das Lagerteil hat zwei Lagerschalen 36, die jeweils eine Lageröffnung 62 haben, die zentrisch zur Drehachse 44 ist, durch die die Spindel 60 hindurchgreift und in der das Getrieberad 32 drehbar gelagert ist. Begriffe wie im Wesentlichen, vorzugsweise und dergleichen sowie möglicherweise als ungenau zu verstehende Angaben sind so zu verstehen, dass eine Abweichung um plusminus 5 %, vorzugsweise plusminus 2 % und insbesondere plus minus ein Prozent vom Normalwert möglich ist.

In den unterschiedlichen Figuren sind hinsichtlich ihrer Funktion gleichwertige Teile stets mit denselben Bezugszeichen versehen, sodass diese in der Regel auch nur einmal beschrieben werden.

### Bezugszeichenliste

- 20: Elektromotor
- 22: Antriebswelle
- 24: Schnecke
- 26: Getriebe
- 28: Hauptteil
- 30: Deckel
- 32: Getrieberad
- 34: Lagermittel
- 36: Lagerschale
- 38: Zylinderbohrung
- 40: Zylinderachse
- 42: Rille
- 44: Drehachse
- 46: Innengewinde
- 48: Lagerstummel
- 50: Schneckenrad
- 52: dreidimensionale Fläche
- 54: Schnittpunkt
- 56: dritte Achse
- 58: Schnittfläche
- 60: Spindel
- 61: Durchlass
- 62: Lageröffnung
- 64: Übergangsbereich
- 66: Luftspalt
- 68: zweiter Schwenkwinkelbereich

## Patentansprüche

1. Stellantrieb für ein Kraftfahrzeug, insbesondere für einen Fahrzeugsitz,
- mit einem Elektromotor (20), der eine Antriebswelle (22) antreibt,
- mit einem Getriebe (26), das a) ein Gehäuse, b) ein Getrieberad (32), das mit der Antriebswelle (22) in Zahneingriff ist und eine Drehachse (44) hat, und c) ein Lagerteil aufweist, das sich zwischen Getrieberad (32) und Gehäuse befindet, und
- mit einer Spindel (60), die eine parallel zur Drehachse (44) verlaufende Spindelachse hat, durch ein Innengewinde (46) des Getrieberades (32) und Durchlässe (61) des Gehäuses verläuft und mit diesem Innengewinde (46) in Eingriff ist, wobei das Gehäuse eine Zylinderbohrung (38) aufweist, die das Lagerteil aufnimmt und die eine Zylinderachse (40) definiert, das Lagerteil von einer dreidimensionalen Fläche begrenzt ist, die in Richtung der Zylinderachse (40) gesehen ihre größte Querschnittsfläche rechtwinklig zur Zylinderachse (40) im Schnittpunkt (54) der Zylinderachse (40) mit der Drehachse (44) hat, wobei diese größte Querschnittsfläche eine Kreisfläche ist und wobei das Lagerteil zwei Lagerschalen (36) aufweist, die jeweils eine Lageröffnung (62) haben, die zentrisch zur Drehachse (44) ist, durch die die Spindel (60) hindurch greift und in der das Getrieberad (32) drehbar gelagert ist, **dadurch gekennzeichnet, dass** mit wachsendem Abstand von diesem Schnittpunkt (54) in beiden Richtungen der Zylinderachse (40) die Größe der Querschnittsfläche abnimmt, insbesondere stetig abnimmt, und dass das Gehäuse mit dem Elektromotor (20) starr verbunden ist.

2. Stellantrieb nach Anspruch 1, **dadurch gekennzeichnet, dass** die größte Querschnittsfläche passgenau in der Zylinderbohrung (38) aufgenommen ist.

3. Stellantrieb nach einem der vorangegangenen Ansprüche, **dadurch gekennzeichnet, dass** die Zylinderachse (40), die Drehachse (44) und eine dritte Achse (56) ein orthogonales Koordinatensystem im Schnittpunkt (54) bilden, und dass in der Ebene von Zylinderachse (40) und dritter Achse der in Richtung der dritten Achse bestimmte Durchmesser der dreidimensionalen Fläche mit wachsendem Abstand vom Schnittpunkt (54) konstant bleibt oder geringfügig abnimmt, insbesondere mit einer Steigung kleiner 5° geringfügig abnimmt.

4. Stellantrieb nach einem der vorangegangenen Ansprüche, **dadurch gekennzeichnet, dass** die Zylinderachse (40), die Drehachse (44) und eine dritte Achse (56) ein orthogonales Koordinatensystem im Schnittpunkt (54) bilden, und dass in der
Ebene von Zylinderachse (40) und Drehachse (44) der in Richtung der Drehachse (44) bestimmte Durchmesser der dreidimensionalen Fläche mit wachsendem Abstand vom Schnittpunkt (54) geringfügig abnimmt, insbesondere mit einer Steigung kleiner 5° geringfügig abnimmt.

5. Stellantrieb nach einem der vorangegangenen Ansprüche, **dadurch gekennzeichnet, dass** die dreidimensionale Fläche (52) von einem Rotationsellipsoid gebildet ist, der eine erzeugende Ellipse hat, welche eine große Halbachse, um die die erzeugende Ellipse rotiert und die mit der Zylinderachse (40) zusammenfällt, und eine kleine Halbachse aufweist, deren Länge i) dem Radius der Zylinderbohrung (38) angepasst ist und ii) maximal 20 % der Länge der großen Halbachse beträgt.

6. Stellantrieb nach einem der vorangegangenen Ansprüche, **dadurch gekennzeichnet, dass** die Lagerschalen (36) baugleich sind.

7. Stellantrieb nach einem der vorangegangenen Ansprüche, **dadurch gekennzeichnet, dass** sich in Richtung der Drehachse (44) gesehen eine Lageröffnung (62) jeweils unterhalb eines Durchlasses (61) des Gehäuses befindet.

8. Stellantrieb nach einem der vorangegangenen Ansprüche, **dadurch gekennzeichnet, dass** zwischen jeder Lageröffnung (62) und dem Getrieberad (32) Lagermittel (34) vorgesehen sind.

9. Stellantrieb nach einem der vorangegangenen Ansprüche, **dadurch gekennzeichnet, dass** das Getrieberad (32) zwei Lagerstummel (48) aufweist, die jeweils in Richtung der Drehachse (44) vorspringen, und dass sich ein Lagerstummel (48) jeweils innerhalb einer der Lageröffnungen (62) befindet.

10. Stellantrieb nach einem der vorangegangenen Ansprüche, **dadurch gekennzeichnet, dass** die Antriebswelle (22) eine Schnecke (24) aufweist, und dass das Getrieberad (32) ein Schneckenrad (50), das insbesondere als sphärisches Zahnrad ausgebildet ist, aufweist und das mit der Schnecke (24) in Zahneingriff ist.

11. Stellantrieb nach einem der vorangegangenen Ansprüche, **dadurch gekennzeichnet, dass** das Gehäuse einen Hauptteil (28), der die Zylinderbohrung (38) ausbildet, und einen Deckel (30) aufweist.

12. Stellantrieb nach einem der vorangegangenen Ansprüche, **dadurch gekennzeichnet, dass** die Durchlässe (61) des Gehäuses Langlöcher sind, die eine große lichte Abmessung haben, welche peripher um die Zylinderachse (40) verläuft, und eine kleine lichte Abmessung haben, die parallel zur Zylinderachse (40) verläuft.

13. Stellantrieb nach einem der vorangegangenen Ansprüche, **dadurch gekennzeichnet, dass** die dreidimensionale Fläche (52) spiegelsymmetrisch ist zu mindestens einer, vorzugsweise aller der folgenden Spiegelebenen
- Schnittfläche (58),
- Ebene der Zylinderachse (40) und der Drehachse (44), und
- Ebene der Zylinderachse (40) und der dritten Achse.

## Claims

1. An actuating drive for a motor vehicle, in particular for a vehicle seat,
- comprising an electric motor (20) which drives a drive shaft (22),
- comprising a transmission (26) which has a) a housing, b) a gear wheel (32) that is meshed with the drive shaft (22) and has a rotation axis (44), and c) a bearing part which is located between the gear wheel (32) and housing, and
- comprising a spindle (60) which has a spindle axis running parallel to the rotation axis (44), runs through an internal thread (46) of the gear wheel (32) and through apertures (61) in the housing, and is in engagement with said internal thread (46),
wherein the housing has a cylinder bore (38) which receives the bearing part and which defines a cylinder axis (40), the bearing part is delimited by a three-dimensional area that, viewed in the direction of the cylinder axis (40), has its largest cross-sectional area at a right angle to the cylinder axis (40) at the intersection point (54) of the cylinder axis (40) with the rotation axis (44), wherein said largest cross-sectional area is a circular area, and wherein the bearing part has two bearing shells (36), each of which has a bearing opening (62) centred relative to the rotation axis (44), through which bearing openings the spindle (60) passes and in which bearing openings the gear wheel (32) is mounted rotatably, **characterised in that**, with increasing distance from the intersection point (54) in both directions along the cylinder axis (40), the size of the cross-sectional area decreases, in particular decreases continuously, and **in that** the housing is rigidly connected to the electric motor (20).

2. The actuating drive according to claim 1, **characterised in that** the largest cross-sectional area is received in the cylinder bore (38) with a precise fit.

3. The actuating drive according to one of the preceding claims, **characterised in that** the cylinder axis (40), the rotation axis (44) and a third axis (56) form an orthogonal coordinate system at the intersection point (54), and **in that**, in the plane defined by the cylinder axis (40) and the third axis, the diameter of the three-dimensional area defined in the direction of the third axis remains substantially constant or slightly decreases, in particular slightly decreases with a gradient less than 5°, with increasing distance from the intersection point (54).

4. The actuating drive according to one of the preceding claims, **characterised in that** the cylinder axis (40), the rotation axis (44) and a third axis (56) form an orthogonal coordinate system at the intersection point (54), and **in that**, in the plane defined by the cylinder axis (40) and the rotation axis (44), the three-dimensional area defined in a direction of the rotational axis (44) slightly decreases, in particular slightly decreases with a gradient less than 5°, with increasing distance from the intersection point (54).

5. The actuating drive according to one of the preceding claims, **characterised in that** the three-dimensional area (52) is defined by a spheroid, which has a generating ellipse, which has a large half-axis about which the generating ellipse rotates and which coincides with the cylinder axis (40), and has a small half-axis of which the length i) is adapted to the radius of the cylinder bore (38) and ii) is no more than 20% of the length of the large half-axis.

6. The actuating drive according to one of the preceding claims, **characterised in that** the bearing shells (36) are identical in design.

7. The actuating drive according to one of the preceding claims, **characterised in that** each bearing opening (62) is located below an aperture (61) of the housing, as viewed in the direction of the rotation axis (44).

8. The actuating drive according to one of the preceding claims, **characterised in that** bearing means (34) are provided between each bearing opening (62) and the gear wheel (32).

9. The actuating drive according to one of the preceding claims, **characterised in that** the gear wheel (32) has two stub shafts (48), each of which extends in the direction of the rotation axis (44), and **in that** the stub shafts (48) are located within one each of the bearing openings (62).

10. The actuating drive according to one of the preceding claims, **characterised in that** the drive shaft (22) has a worm (24), and **in that** the gear wheel (32) has a worm wheel (50) which is formed in particular as a spherical toothed wheel and which is meshed with the worm (24).

11. The actuating drive according to one of the preceding claims, **characterised in that** the housing has a main part (28), which forms the cylinder bore (38), and has a cap (30).

12. The actuating drive according to one of the preceding claims, **characterised in that** the apertures (61) in the housing are slots which have a large opening dimension which runs peripherally about the cylinder axis (40) and a small opening dimension which runs parallel to the cylinder axis (40).

13. The actuating drive according to one of the preceding claims, **characterised in that** the three-dimensional area (52) is mirror-symmetrical to at least one, preferably all, of the following mirror planes:
- sectional plane (58),
- plane of the cylinder axis (40) and the rotation axis (44), and
- plane of the cylinder axis (40) and the third axis.

## Revendications

1. Servomoteur, destiné à un véhicule automobile, notamment à un siège de véhicule,
- pourvu d'un moteur électrique (20), qui entraîne un arbre moteur (22),
- pourvu d'une transmission (26), qui comporte a) un boîtier, b) une roue dentée (32), qui est en engrènement avec l'arbre moteur (22) et qui dispose d'un axe de rotation (44), et c) une pièce d'appui qui se trouve entre la roue dentée (32) et le boîtier, et
- pourvu d'une broche (60), qui dispose d'un axe de broche qui s'écoule à la parallèle de l'axe de rotation (44), qui s'écoule à travers un taraudage (46) de la roue dentée (32) et des passages (61) dans le boîtier et qui est en engagement avec ledit taraudage (46),
le boîtier comportant un perçage cylindrique (38), qui reçoit la pièce d'appui et qui définit un axe de cylindre (40), la pièce d'appui étant délimitée par une surface tridimensionnelle, qui considérée dans la direction de l'axe de cylindre (40) détient sa plus grande superficie de section transversale à angle droit par rapport à l'axe de cylindre (40), au point d'intersection (54) de l'axe de cylindre (40) avec l'axe de rotation (44), ladite plus grande superficie de section transversale étant une surface circulaire et la pièce d'appui comportant deux coussinets de palier (36), dont chacun dispose d'une ouverture de palier (62) qui est centrée par rapport à l'axe de rotation (44), à travers laquelle s'engage la broche (60) et dans laquelle la roue dentée (32) est logée en rotation, **caractérisé en ce qu'**au fur et à mesure que l'écart par rapport audit point d'intersection (54) croît, dans les deux directions de l'axe de cylindre (40), la dimension de la superficie de section transversale diminue, diminue notamment avec constance et **en ce que** le boîtier est assemblé de manière rigide avec le moteur électrique (20).

2. Servomoteur selon la revendication 1, **caractérisé en ce que** la plus grande superficie de section transversale est reçue sur mesure dans le perçage cylindrique (38).

3. Servomoteur selon l'une quelconque des revendications précédentes, **caractérisé en ce que** l'axe de cylindre (40), l'axe de rotation (44) et un troisième axe (56) forment un système de coordonnées orthogonales au point d'intersection (54), et **en ce que** dans le plan de l'axe de cylindre (40) et du troisième axe, le diamètre de la surface tridimensionnelle déterminé dans la direction du troisième axe reste constant ou diminue légèrement, notamment avec une pente inférieure à 5°, au fur et à mesure que l'écart par rapport au point d'intersection (54) croît.

4. Servomoteur selon l'une quelconque des revendications précédentes, **caractérisé en ce que** l'axe de cylindre (40), l'axe de rotation (44) et un troisième axe (56) forment un système de coordonnées orthogonales au point d'intersection (54), et **en ce que** dans le plan de l'axe de cylindre (40) et de l'axe de rotation (44), le diamètre de la surface tridimensionnelle déterminé dans la direction de l'axe de rotation (44) diminue légèrement, notamment avec une pente inférieure à 5°, au fur et à mesure que l'écart par rapport au point d'intersection (54) croît .

5. Servomoteur selon l'une quelconque des revendications précédentes, **caractérisé en ce que** la surface tridimensionnelle (52) est formée par un ellipsoïde de rotation, qui détient une ellipse génératrice, laquelle comporte un demi-grand axe, autour duquel l'ellipse génératrice est en rotation et qui coïncide avec l'axe de cylindre (40) et un demi-petit axe, dont la longueur i) est adaptée au rayon du perçage cylindrique (38) et ii) s'élève au maximum à 20 % de la longueur du demi-grand axe.

6. Servomoteur selon l'une quelconque des revendications précédentes, **caractérisé en ce que** les coussinets de palier (36) sont de configuration identique.

7. Servomoteur selon l'une quelconque des revendications précédentes, **caractérisé en ce que**, considérée en direction de l'axe de rotation (44), une ouverture de palier (62) se trouve chaque fois sous un passage (61) du boîtier.

8. Servomoteur selon l'une quelconque des revendications précédentes, **caractérisé en ce qu'**entre chaque ouverture de palier (62) et la roue dentée (32) sont prévus des moyens d'appui (34).

9. Servomoteur selon l'une quelconque des revendications précédentes, **caractérisé en ce que** la roue dentée (32) comporte deux bouts de palier (48), dont chacun saillit en direction de l'axe de rotation (44) et **en ce qu'**un bout de palier (48) se trouve chaque fois à l'intérieur de l'une des ouvertures de palier (62).

10. Servomoteur selon l'une quelconque des revendications précédentes, **caractérisé en ce que** l'arbre moteur (22) comporte une vis sans fin (24) et **en ce que** la roue dentée (32) comporte une roue (50) à vis sans fin, qui est conçue notamment sous la forme d'une roue dentée sphérique et qui est en engrènement avec la vis sans fin (24).

11. Servomoteur selon l'une quelconque des revendications précédentes, **caractérisé en ce que** le boîtier comporte une partie principale (28), qui forme le perçage cylindrique (38) et qui comporte un couvercle (30).

12. Servomoteur selon l'une quelconque des revendications précédentes, **caractérisé en ce que** les passages (61) du boîtier sont des trous oblongs, qui ont une dimension intérieure la plus grande, qui s'écoule en périphérie autour de l'axe de cylindre (40) et une dimension intérieure la plus petite, qui s'écoule à la parallèle de l'axe de cylindre (40).

13. Servomoteur selon l'une quelconque des revendications précédentes, **caractérisé en ce que** la surface tridimensionnelle (52) est en symétrique spéculaire d'au moins un, de préférence de tous les plans de symétrie suivants
- la surface d'intersection (58),
- le plan de l'axe de cylindre (40) et de l'axe de rotation (44), et
- le plan de l'axe de cylindre (40) et du troisième axe.
